# EUROPEAN PATENT APPLICATION

(11) **EP 4 725 816 A1**
(43) Date of publication of application: **15.04.2026**
(21) Application number: 25205577.7
(22) Date of filing: 30.09.2025
(51) Int. Cl.: B62J 27/00

(54) **RADAR-ASSISTED WARNING DEVICE**

(30) Priority: 08.10.2024 TW 113210872 U
(71) Applicant: Terasilic Co., Ltd., 231 New Taipei City Xindian Dist. (TW)
(72) Inventor: YU, Shih-An, 231 New Taipei City (TW)
(74) Representative: Slingsby Partners LLP

(57) **Abstract**

A radar-assisted warning device (10) is suitable for being installed on a bicycle (20). The radar-assisted warning device (10) includes a radar device (12), a warning component (14), and a transmission line (16). The radar device (12) is installed on an end (161, 162) fixing component (14, 24) of the bicycle (20). The warning component (14) is installed on a handlebar (22) of the bicycle (20). The transmission line (16) has a first end (161) and a second end (162) opposite to each other. The first end (161) is fixedly and electrically connected to the radar device (12), and the second end (162) is fixedly and electrically connected to the warning component (14). The radar-assisted warning device (10) has the advantages of simple structure and low cost.

## Description

### CROSS-REFERENCE TO RELATED APPLICATION

This application claims priority to Taiwan Application No. 113210872, filed on October 8, 2024. The entirety of the above-mentioned patent application is hereby incorporated by reference herein and made a part of this specification.

### FIELD OF THE INVENTION

The present invention relates to a warning device, and more particularly to a radar-assisted warning device.

### BACKGROUND OF THE INVENTION

With a rise in prices of gasoline and an increase in environmental awareness, more and more people are using bicycles as transportation. Many safety devices, such as reflective jackets, reflective strips, LED lights, etc., have been widely used to increase the safety of riding bicycles. Although this type of safety device can increase visibility of a bicycle or a rider, it does not provide real-time feedback when nearby vehicles are approaching.

Because bicycles often pose a hazard to vehicles approaching from behind or from a side, the rider of the bicycle may not be aware of this approach before impact. Therefore, a warning device is needed to attract the rider's attention, thereby reducing the risk of the bicycle being hit by a vehicle.

### SUMMARY OF THE INVENTION

The present invention provides a radar-assisted warning device that automatically senses a distance between a bicycle and a nearby vehicle using a radar device and provides a warning via a warning component to draw the rider's attention, thereby reducing the risk of the bicycle being hit by a rear-end vehicle. The radar-assisted warning device has the advantages of a simple structure and low cost.

To achieve one, some, or all of the above-mentioned purposes, or other purposes, an embodiment of the present invention provides a radar-assisted warning device suitable for installation on a bicycle. The radar-assisted warning device includes a radar device, a warning component, and a transmission line. The radar device is arranged on an end fixing component of the bicycle. The warning component is arranged on the handlebar of the bicycle. The transmission line has a first end and a second end opposite to each other. The first end is fixedly and electrically connected to the radar device, and the second end is being fixedly and electrically connected to the warning component.

In one embodiment of the present invention, the end fixing component is a seat tube of the bicycle.

In one embodiment of the present invention, the bicycle further includes a top tube, the top tube is connected to a seat tube and the handlebar, and the transmission line is arranged along the top tube of the bicycle.

In one embodiment of the present invention, the end fixing component is a taillight of the bicycle.

In one embodiment of the present invention, the end fixing component is a rack of the bicycle.

In one embodiment of the present invention, the warning component is selected from one of a buzzer and a vibrator.

In one embodiment of the present invention, the first end of the transmission line is non-detachably connected to the radar device.

In one embodiment of the present invention, the second end of the transmission line is non-detachably connected to the warning component.

In one embodiment of the present invention, the radar device senses a relative direction and a relative distance between the bicycle and surrounding objects and sends a trigger signal to the warning component via the transmission line to trigger the warning component.

The radar-assisted warning device of the present invention is connected to the warning component and the radar device in a non-detachable manner via a physical transmission line, resulting in a simple structure and low cost. The radar device automatically senses the distance between a bicycle and nearby vehicles and triggers the warning component to provide a warning to attract the rider's attention, thereby reducing the risk of the bicycle being hit by a rear-end vehicle.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

The present invention will become more readily apparent to those ordinarily skilled in the art after reviewing the following detailed description and accompanying drawings, in which:
FIG. 1 is a schematic diagram of a structure of a radar-assisted warning device according to an embodiment of the present invention.
FIG. 2 is a schematic diagram of a first application of the radar-assisted warning device according to an embodiment of the present invention on a bicycle.
FIG. 3 is a schematic diagram of a second application of the radar-assisted warning device according to an embodiment of the present invention on a bicycle.
FIG. 4 is a schematic diagram of a third application of the radar-assisted warning device according to an embodiment of the present invention on a bicycle.

### DETAILED DESCRIPTION OF PREFERRED EMBODIMENTS

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

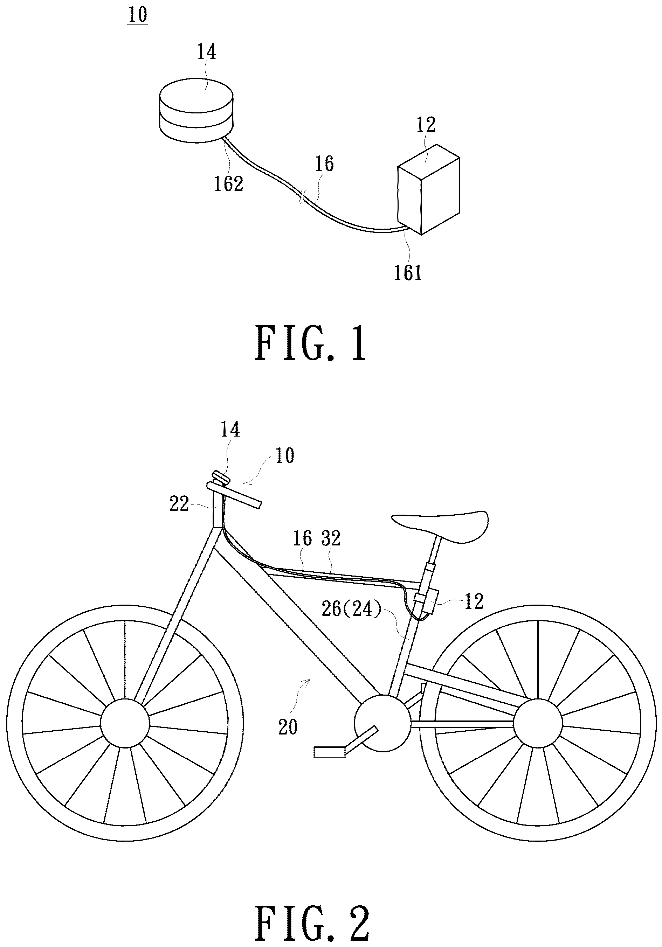

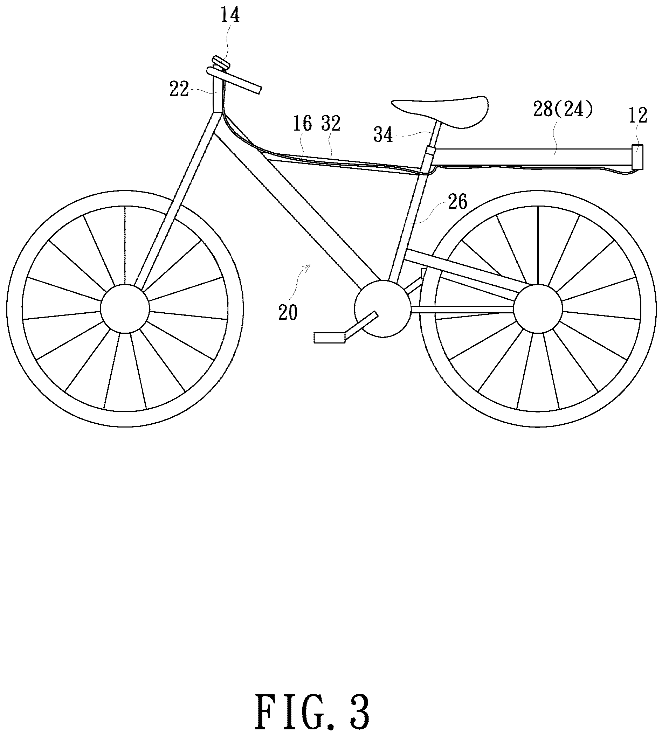

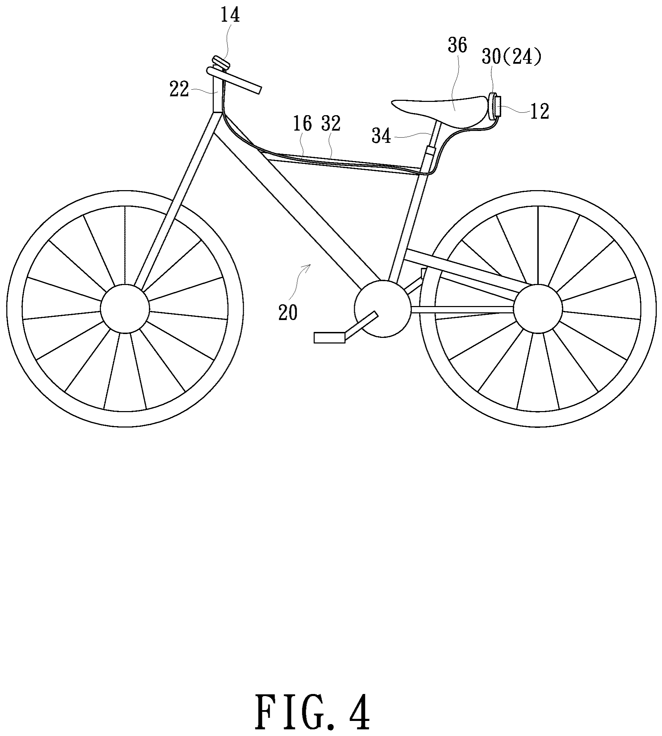

FIG. 1 is a schematic diagram of a structure of a radar-assisted warning device according to an embodiment of the present invention, FIG. 2 is a schematic diagram of a first application of the radar-assisted warning device according to an embodiment of the present invention on a bicycle, FIG. 3 is a schematic diagram of a second application of the radar-assisted warning device according to an embodiment of the present invention on a bicycle, and FIG. 4 is a schematic diagram of a third application of the radar-assisted warning device according to an embodiment of the present invention on a bicycle. As shown in FIG. 1, the radar-assisted warning device 10 includes a radar device 12, a warning component 14, and a transmission line 16. The transmission line 16 has a first end 161 and a second end 162 opposite to each other. The first end 161 is fixedly and electrically connected to the radar device 12, while the second end 162 is fixedly and electrically connected to warning component 14. In one embodiment, the first end 161 of the transmission line 16 is non-detachably connected to the radar device 12, while the second end 162 of the transmission line 16 is non-detachably connected to the warning component 14.

As shown in FIGS. 2 to 4, the radar-assisted warning device 10 is suitable for installation on a bicycle 20. The bicycle 20 includes a handlebar 22 and an end fixing component 24. The radar device 12 is arranged on the end fixing component 24 of the bicycle 20, and the warning component 14 is arranged on the handlebar 22 of the bicycle 20. The end fixing component 24 can be, but is not limited to, a seat tube 26 (shown in FIG. 2), a rack 28 (shown in FIG. 3), or a taillight 30 (shown in FIG. 4) of the bicycle 20. The radar device 12 can be coupled to the end fixing component 24 of the bicycle 20 by, for example, clamping, sticking, or screwing. The warning component 14 can be coupled to the handlebar 22 of the bicycle 20 by, for example, clamping, sticking, or screwing.

Referring to FIG. 2, in one embodiment, the radar device 12 is disposed on the seat tube 26 of the bicycle 20 and faces rearward of the bicycle 20. In one embodiment, the bicycle 20 further includes a top tube 32, which connects the seat tube 26 and the handlebar 22. The transmission line 16 of the radar-assisted warning device 10 is disposed along the top tube 32 of the bicycle 20, but the present invention is not limited thereto.

Referring to FIG. 3, in one embodiment, the radar device 12 is disposed at an end of the rack 28 of the bicycle 20 and faces the rear of the bicycle 20. The rack 28 is pivotally connected to, for example, a seat tube 26 or a seat post 34 of the bicycle 20. The warning component 14 is disposed on the handlebar 22 of the bicycle 20. The transmission line 16 connecting the warning component 14 and the radar device 12 can be arranged, for example, along the rack 28 and the top tube 32, but is not limited thereto.

Referring to FIG. 4, in one embodiment, the radar device 12 is disposed on the taillight 30 of the bicycle 20 and faces the rear of the bicycle 20; the warning component 14 is disposed on the handlebar 22 of the bicycle 20. In one embodiment, the taillight 30 is disposed, for example, behind a saddle 36, but is not limited thereto. In an embodiment not shown, the taillight 30 can be disposed, for example, at the end of the rack 28 (shown in FIG. 3). The transmission line 16 connecting the warning component 14 and the radar device 12 is disposed, for example, along the seat post 34 and the top tube 32, but is not limited thereto.

The radar device 12 is, for example, a millimeter-wave radar, and the warning component 14 can be selected from one of a buzzer and a vibrator. The radar device 12 senses a relative direction and a relative distance between the bicycle 20 and surrounding objects and sends a trigger signal to the warning component 14 via the transmission line 16 to trigger the warning component 14 and alert the rider to changes in the surrounding environment. The buzzer emits a sound upon receiving the trigger signal, and the vibrator generates vibration upon receiving the trigger signal.

As described above, in the radar-assisted warning device of the present embodiment, the physical transmission line is non-detachably connected to the warning component and the radar device, resulting in a simple structure and low cost. The radar device can automatically sense the distance between the bicycle and nearby vehicles and trigger the warning component to provide a warning to attract the rider's attention, thereby reducing the risk of the bicycle being hit by a rear-end vehicle.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A radar-assisted warning device (10) suitable for installation on a bicycle (20), the bicycle (20) comprising a handlebar (22) and an end fixing component (24), and the radar-assisted warning device (10) comprising:
a radar device (12), arranged on the end fixing component (24) of the bicycle (20);
a warning component (14), arranged on the handlebar (22) of the bicycle (20); and
a transmission line (16), having a first end (161) and a second end (162) opposite to each other, wherein the first end (161) is fixedly and electrically connected to the radar device (12), and the second end (162) is fixedly and electrically connected to the warning component (14).

2. The radar-assisted warning device (10) according to claim 1, **characterized in that** the end fixing component (24) is a seat tube (26) of the bicycle (20).

3. The radar-assisted warning device (10) according to claim 2, **characterized in that** the bicycle (20) further comprises a top tube (32), the top tube (32) is connected to the seat tube (26) and the handlebar (22), and the transmission line (16) is arranged along the top tube (32) of the bicycle (20).

4. The radar-assisted warning device (10) according to claim 1, **characterized in that** the end fixing component (24) is a taillight (30) of the bicycle (20).

5. The radar-assisted warning device (10) according to claim 1, **characterized in that** the end fixing component (24) is a rack (28) of the bicycle (20).

6. The radar-assisted warning device (10) according to claim 1, **characterized in that** the warning component (14) is selected from one of a buzzer and a vibrator.

7. The radar-assisted warning device (10) according to claim 1, **characterized in that** the first end (161) of the transmission line (16) is non-detachably connected to the radar device (12).

8. The radar-assisted warning device (10) according to claim 7, **characterized in that** the second end (162) of the transmission line (16) is non-detachably connected to the warning component (14).

9. The radar-assisted warning device (10) according to claim 1, **characterized in that** the radar device (12) senses a relative direction and a relative distance between the bicycle (20) and surrounding objects and sends a trigger signal to the warning component (14) via the transmission line (16) to trigger the warning component (14).
